# EUROPÄISCHE PATENTSCHRIFT

(11) **EP 0 799 519 B1**
(45) Veröffentlichungstag und Bekanntmachung des Hinweises auf die Patenterteilung: **16.06.1999**
(21) Anmeldenummer: 95940964.0
(22) Anmeldetag: 16.12.1995
(51) Int. Cl.: H02K 21/12, H02K 19/10

(54) **TRANSVERSALFLUSSMASCHINE**
TRANSVERSE FLUX MACHINE
MACHINE A FLUX TRANSVERSAL

(30) Priorität: 21.12.1994 DE 4445816
(43) Veröffentlichungstag der Anmeldung: 08.10.1997
(73) Patentinhaber: HILL, Wolfgang, 76135 Karlsruhe (DE)
(72) Erfinder: HILL, Wolfgang, 76135 Karlsruhe (DE)
(74) Vertreter: Hengelhaupt, Jürgen, Dipl.-Ing.
(86) Internationale Anmeldenummer: DE9501807
(87) Internationale Veröffentlichungsnummer: WO9619861

(56) Entgegenhaltungen:
- DE-A- 4 314 513
- US-A- 3 560 820
- US-A- 3 806 744
- US-A- 4 748 361
- IEEE TRANSACTIONS ON POWER APPARATUS AND SYSTEMS, Bd. 93, Nr. 1, Januar 1974, NEW YORK US, Seiten 367-376, XP002003694 UNNEWEHR ET AL: "an axial air-gap reluctance motor for variable speed applications"

## Beschreibung

Die Erfindung betrifft eine Transversalflußmaschine gemäß dem Oberbegriff des Anspruch 1.

Eine Transversalflußmaschinen besticht durch die Einfachheit ihrer Wicklung. Dagegen entstehen bei der Herstellung des weichmagnetischen Körpers erheblich höhere Kosten.

Durch anfallenden Verschnitt beim Stanzen der Elektrobleche werden die Materialkosten, durch große und komplizierte Schnittformen die Werkzeugkosten und durch die Handhabung schwerer Einzelteile die Montagekosten erhöht. Der erreichbare Wirkungsgrad und/oder die Leistungsdichte der Maschine sind infolge der Sättigungsflußdichte des weichmagnetischen Materials und der Ausnutzbarkeit der Luftspaltflächen begrenzt.

In der ***DE 42 23 831 A1*** wird eine Transversalflußmaschine beschrieben, die vier Wicklungsringe aufweist, wobei jeweils zwei Wicklungsringe unterschiedliche Durchmesser besitzen. Die Rotorelemente werden axial in die vier Ringnuten des Stators eingeschoben, so daß die Maschine acht Luftspalte aufweist, in denen der magnetische Fluß in radialer Richtung fließt.

Aus der ***GB-PS 1 363 979*** ist eine Transversalflußmaschine bekannt, deren Rotoren axial zwischen den Statoren mit den Leiterringen angeordnet sind, so daß in jedem Magnetkreis zwei Luftspalte mit unterschiedlichen Radien existieren.

Aus der ***DE-PS 597 597*** ist eine einphasige Transversalflußmaschine bekannt, deren u-förmig um den Leiterring angeordnete weichmagnetische Kerne aus zwei Teilen zusammengesetzt sind. Die Luftspalte befinden sich radial innerhalb des Leiterrings und die Kraftwirkung des Magnetfeldes weist in allen Luftspalten die gleiche radiale Richtung auf. Die pulsierenden radialen Luftspaltkräfte wirken auf das ringförmige Läufergehäuse und erzeugen Schwingungen, Geräusche und Verluste. Daher muß das Gehäuse stabil und schwer ausgeführt werden.

Auch in der aus der ***DE 43 14 513 A1*** bekannte Außenläuferbauform addieren sich die senkrecht zur Bewegungsrichtung wirkenden Magnetkräfte der beiden Luftspalte eines Magnetkreises, wodurch das Ziel einer maximalen Kraftdichte verfehlt wird.

In der ***GB 2 161 992 A*** wird ein nur in eine Richtung arbeitenden Motor beschrieben, wobei dessen u-förmigen Statorkerne aus drei Teilen bestehen. Die den magnetischen Fluß der beiden Phasen leitenden Bauteile sind durch ein Distanzstück voneinander getrennt. Die im Luftspalt radial wirkenden Magnetkräfte addieren sich.

Aus der ***DE 43 14 513 A1*** sind Außenläuferbauformen von Transversalflußmaschinen bekannt, in denen der magnetische Fluß radial innerhalb der magnetisch aktiven Rotorelemente den Luftspalt in radialer Richtung durchfließt. Die Kraftdichte soll durch mehr als zwei Luftspalte auf jeder Seite der Wicklungsanordnung gesteigert werden. Diese Luftspaltanordnungen erlauben ein jederzeitiges axiales Ineinanderschieben von Rotor und Stator.

Es sind noch zahlreiche weitere Bauformen von Transversalflußmaschinen bekannt, die jedoch das eingesetzte weichmagnetische Material nur unzureichend ausnutzen und fertigungstechnisch aufwendige Blechschnitte benötigen.

Der Erfindung liegt daher die Aufgabe zugrunde, eine Transversalflußmaschine derart weiter zu bilden, daß hohe Wirkungsgrade und Leistungsdichten mit möglichst geringem Herstellungsaufwand erreicht werden.

Diese Aufgabe wird erfindungsgemäß mit den Merkmalen der Ansprüche 1 und 2 gelöst. Erfindungsgemäß weisen die um die Leiterringe angeordneten, magnetisch aktiven Körper jeweils zwei Luftspalte auf, die beide radial außerhalb des Leiterringes angeordnet sind, wobei die magnetisch aktiven Rotorteile axial innerhalb der Enden der weichmagnetischen Statorteile liegen. Hierdurch kompensieren sich die pulsierenden magnetischen Normalkräfte innerhalb des Magnetkreises und das Gehäuse wird entlastet. Rotor und Stator sind hierdurch ineinander verzahnt. Entweder die Stator- und Rotorringe werden bei der Montage abwechselnd in Position gebracht oder der Rotorring besteht aus mehreren baugleichen Teilen, z.B. zwei Hälften. Die Kombination, Anordnung beider Luftspalte eines magnetischen Kreises radial außerhalb des Leiterrings mit dem maximalen Abstand zur Rotationsachse und Kompensation der Luftspaltkräfte durch innerhalb der U-Teilenden liegende Rückschlußteile, führt zu erstaunlich hohen Leistungsdichten und Wirkungsgraden.

Ein weiterer Grundgedanke der Erfindung stellt die Mehrfachausnutzung von weichmagnetischen Bauteilen eines Magnetkreises durch Magnetfelder benachbarter Leiterringe unterschiedlicher Phase dar. Hierdurch wird eine höhere zeitliche Ausnutzung des weichmagnetischen Materials erreicht, wobei der Gewichtsanteil dieser von phasenverschoben Magnetfelderen genutzten Masse mit zunehmender Phasenanzahl ansteigt. Baugruppen unterschiedlicher Phase weisen baugleiche Scheiben auf, die axial hintereinander angeordnet sind.

Weiterhin setzen sich die u-förmigen Statorkerne zur einfachen Montage und für den Einsatz kornorientierter Stanzteile vorteilhafte aus mehreren Segmenten zusammen, die den Fluß vorwiegend in eine Richtung führen. Bei unterteiltem Rotorring können die Statorkerne jedoch auch einstückig - z.B. als kornorientierte Schnittbandkerne - vorgefertigt werden.

Die Erfindung wird anhand vorteilhafter Ausführungsformen in den **Zeichnungen** dargestellt.
- Fig. 1: zeigt den Zusammenbau einer einphasigen Baugruppe einer 24-poligen Transversalflußmaschine nach dem Reluktanzprinzip;
- Fig. 2: zeigt einen Ausschnitt aus Fig. 1;
- Fig. 3: zeigt vier Querschnitte unterschiedlicher Magnetkreise mit Hartmagneten;
- Fig. 4: zeigt den Querschnitt eines dreiphasigen Radnabendirektantriebs;
- Fig. 5: zeigt den Querschnitt eines fünfphasigen Trommelmotors;
- Fig. 6: zeigt den Querschnitt eines dreiphasigen Antriebs, mit doppelt genutzen, mittleren Stern scheiben;
- Fig. 7: zeigt Fluß- und Stromverläufe der Maschine aus Fig. 6;
- Fig. 8: zeigt eine räumliche Darstellung der aktiven Bauteile aus Fig. 6.

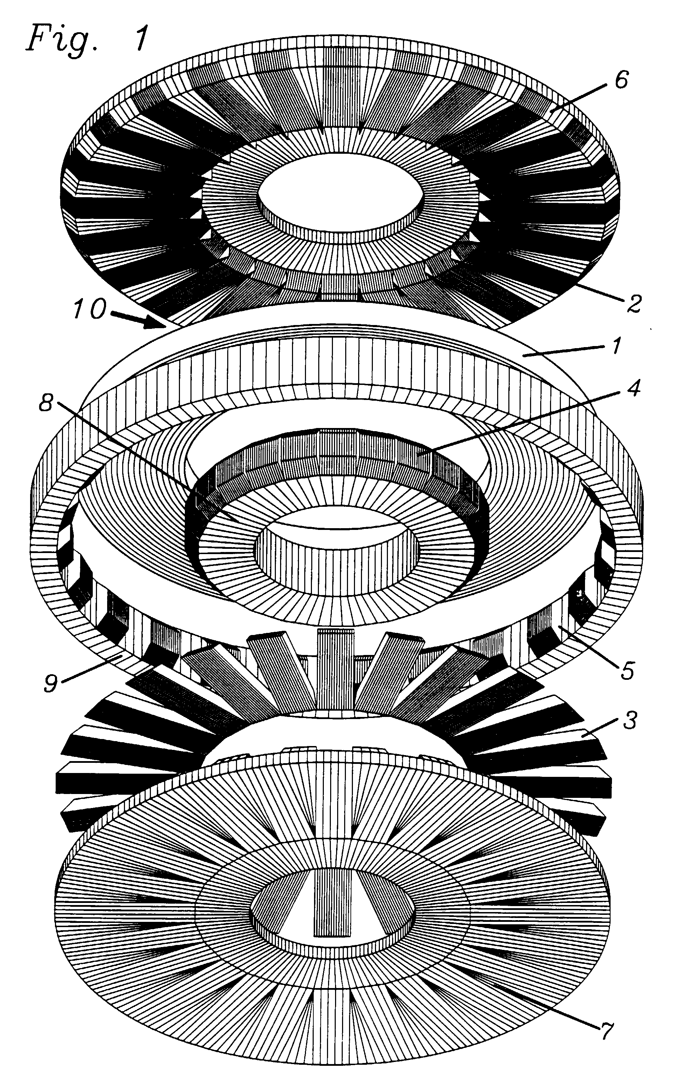

In **Figur 1** sind die wesentlichen Bauelemente einer modular aufgebauten Transversalflußmaschine beim Zusammensetzen dargestellt. Der Leiterring **1** besteht aus einem aufgerollten Kupfer- oder Aluminiumband. Um ihn sind vierundzwanzig weichmagnetische Körper am Umfang gleichmäßig verteilt angeordnet. Jeder dieser das elektrisch erzeugte Magnetfeld bündelnden Körper besteht wiederum aus vier geblechten Segmenten **2, 3, 4** und **5**, wobei jeweils gegenüberliegende Segmente **2** und **3** bzw. **4** und **5** baugleich sind. Die beiden den Magnetfluß radial leitenden Segmente **2, 3** sind auf Halterungsscheiben **6, 7** aufgeklebt, die aus einem magnetisch und elektrisch nichtleitenden Werkstoff bestehen, wobei die Segmente **3** zur Verdeutlichung ihrer Bauform und Anordnung axial vor der Halterungsscheibe **7** dargestellt sind. Auch die den Fluß in axiale Richtung leitenden Segmente **4, 5** sind auf Halterungringen **8, 9** aufgeklebt. Neben dem Leiterring **1** und den beiden weichmagnetischen Segmentbauformen **2, 3** bzw. **4, 5** besteht, die einphasige Baugruppe **10** somit aus zwei baugleichen Halterungsscheiben **6, 7** sowie zwei unterschiedlichen Halterungsringen **8, 9**.

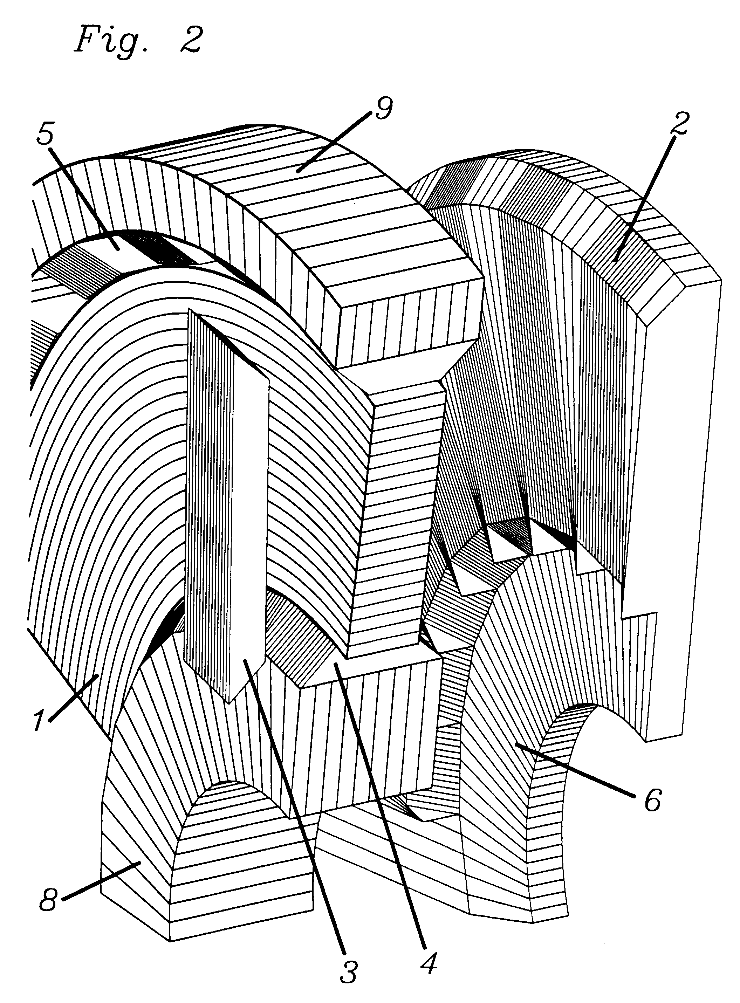

In **Fig. 2** wird ein Ausschnitt aus Fig. 1 vergrößert dargestellt. Es ist erkennbar, wie jeweils vier Segmente **2, 4, 3, 5** einen das Magnetfeld um den Leiterring **1** verstärkenden Kreis bilden. Hierbei liegen die Segmente **2, 3** und **4** flächig und ortsfest aneinander, während die radial äußeren Segmente **5** zusammen mit dem äußeren Halterungsring **9** um diese Anordnung rotieren, wobei der Widerstand des magnetische Kreises periodisch variiert.

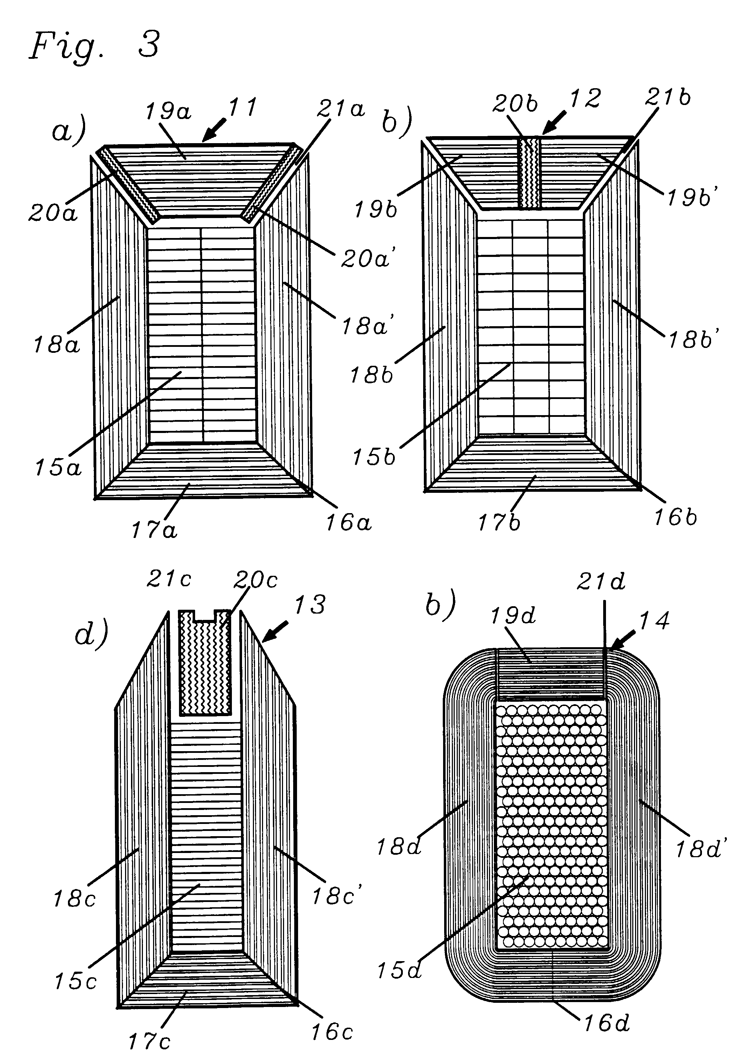

**Fig. 3** zeigt vier vorteilhafte Bauformen **11** bis **14** im Querschnitt, wobei sich die Darstellung jeweils auf den Leiterring **15a-d** und einen ihn umgebenen magnetischen Körper beschränkt. Die Leiterringe **15a-d** werden jeweils von u-förmigen weichmagnetischen Körpern **16a-d** von drei Seiten umschlossen. Diese bestehen aus zwei oder drei aneinanderliegenden Segmenten **17a-18d'**, die den Fluß vorwiegend in eine Richtung führen, wobei die beiden den Fluß radial leitenden Segmente **18a-d** bzw. **18a'-d'** baugleich sind. Die radial außerhalb des Leiterringes **15a-d** angeordneten hart- und/oder weichmagnetischen Segmente **19a-d** bzw. **20a-d** unterscheiden sich voneinander.

In der Bauform **11** vermindern am geschrägtem Luftspalt **21a** angeordnete Permanentmagnete **20a, 20a'** die Pulsationverluste. Dank der Schrägung kann mit niedrigen Flußdichten im Magneten eine hohe Flußdichte in den Segmenten **18a, 17, 18a', 19a** erreicht werden. Sowohl das hart- als auch das weichmagnetische Material wird optimal ausgenutzt.

Für billigere und einfacher handhabbare Permanentmagnete **20b** besteht das äußere Segment in der Bauform **12** aus zwei gleichen Häften **19b, 19b'**. Der den Leiterring **15b** u-förmig umschließende weichmagnetische Körper **16b** ist baugleich mit dem in Fig. 3a.

In axial sehr schmalen Bauformen **13** können die äußeren weichmagnetischen Segmente entfallen. Zwischen den Enden der beiden Radialsegmente **18c, 18c'** ist lediglich ein ringförmiger Permanentmagnet **20c** angeordnet, der sektorweise axial entgegengesetzt aufmagnetisiert ist.

Mit weniger Teilen, trotz des Einsatzes kornorientierten Materials, kommt die Bauform **14** aus. Sie besteht aus drei Teilen **18d, 18d', 19d** eines rechteckig aufgewickelten Schnittbandkernes **17d**. Zur Kompensation der in der Reluktanzmaschine stärker pulsieren magnetischen Normalkräfte verlaufen die schmalen Luftspalte **21d** radial.

Weiterhin werden in Fig. 3 unterschiedlich vorgefertigte Leiterringe **15a-d** dargestellt. So ist der zweilagige Leiterring **15a** vorteilhaft mit zwei radial außen liegenden Enden herstellbar, indem das Mittelstück eines Profildrahtes geeignet verformt und die beiden gleichlangen Enden gegensinnig aufgewickelt werden. Mit einem mehrlagigen Leiterring **15b** aus Profildraht wird ein hoher Füllfaktor erreicht, axial schmale Maschinen ermöglichen einlagige Leiterringe **15c** und bei hohen Windungszahlen und von der Rechteckform abweichendem Nutquerschnitt sind verdichtete Leiterringe **15d** aus Runddraht einsetzbar.

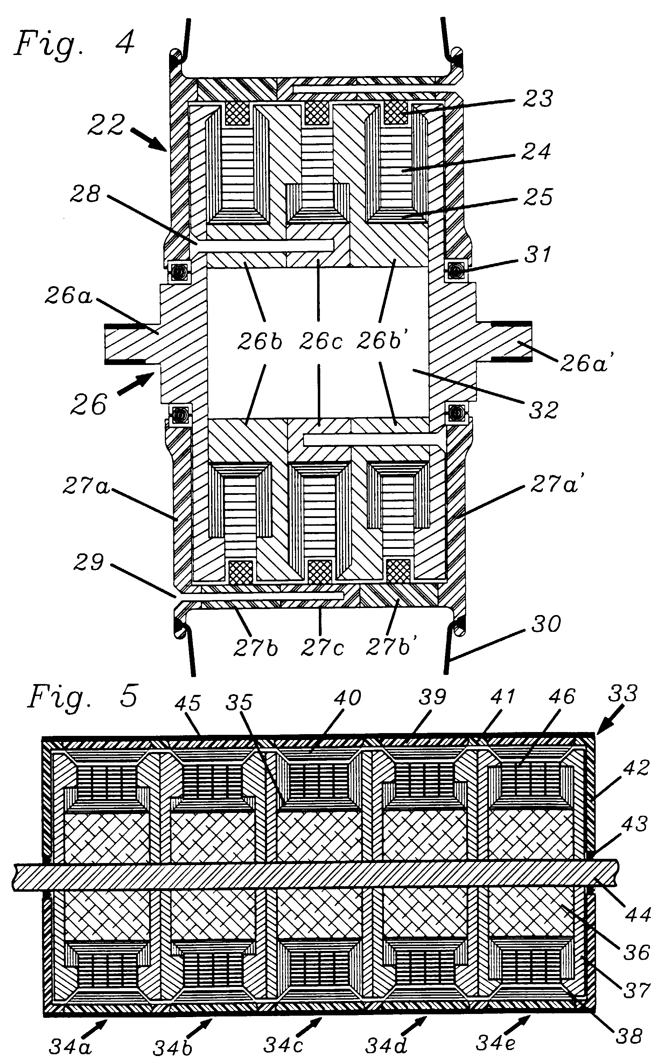

In **Fig. 4** ist der Querschnitt einer vollständigen dreiphasigen Transversalflußmaschine **22** als Radnabendirektantrieb mit Permanenterregung dargestellt. Die Bauform des magnetisch aktiven Teils entspricht Fig. 3d. Die Magnetringe **23** bestehen aus kunststoffgebundenen Seltenerden, die einlagigen Leiterringe **24** aus dünnen Leiterband und die u-förmigen weichmagnetischen Körper **25** aus mit Backlack zusammengefügten, kornorientierten Elektroblechen.

Alle drei einphasigen Baugruppen sind baugleich und werden durch fünf Halterungselemente **26a-c** in einer um jeweils 120°ₑₗ zueinander versetzten Position gehalten. Durch die Ausnutzung von Spiegelsymmetrien sind nur drei unterschiedliche Halterungsbauformen erforderlich, die als Gußteile vorgefertigt werden. Sowohl die durch die Halterungselemente gebildete Nabe **26**, als auch den fünfteiligen Rotor **27a-c** halten abwechselnd von verschiedenen Seiten axial eingesteckte Schrauben **28, 29** zusammen. Von den Radspeichen 30 übertragene Kräfte werden über Kugellager **31** an die Nabe **26** weitergeleitet. In einem Hohlraum **32** innerhalb der Nabe ist die Ansteuerelektronik untergebracht.

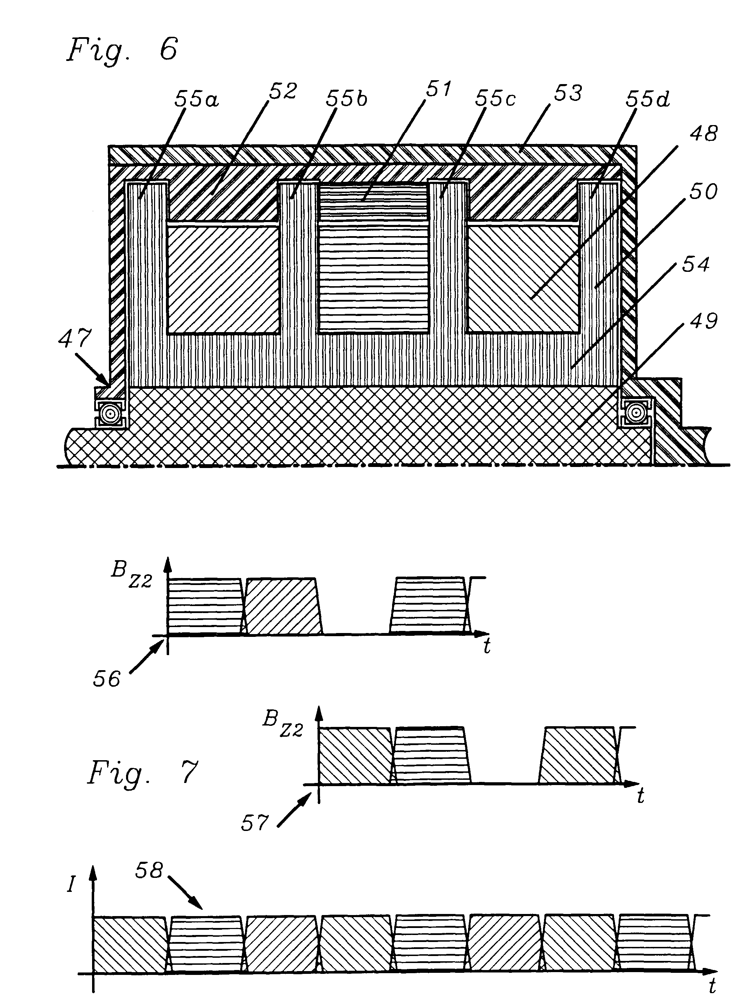

**Fig. 5** zeigt den Querschnitt einer fünfphasigen Transversalflußmaschinem **33**, die als Reluktanzmaschine ausgeführt ist. Die baugleichen Baugruppen **34a - e** sind im stadionären Teil zueinander tangential versetzt angeordnet, weshalb die Querschnitte u-förmigen weichmagnetischen Körper **35** unterschiedlich vollständig sichtbar sind. Während nur zwei unterschiedlichen stationären Halterungselemente **36, 37** benötigt werden, setzt sich das rotierende Maschinengehäuse aufgrund der geschrägten Luftspalte **38** neben fünf äußeren Halterungsringen **39** mit weichmagnetischen Segmenten **40** aus vier Distanzringen **41** und den beiden Motorschildern **42**, die sich über Lager **43** auf der Welle **44** abstützen, zusammen. Als Trommelmotor ausgeführt steckt über dem Rotor eine gummierte Hülse **45**.

Alternativ kann auch das Gehäuse feststehend ausgeführt und die dann rotierenden Leiterringe **46** über Bürsten oder mitrotierende Erregermaschinen angesteuert werden. Weitere Ausführungsformen - z.B. mit topfförmigem Läufer - sind mit dem erfindungsgemäßen modularen Bauprinzip ebenfalls realisierbar.

In **Fig. 6** ist ein dreiphasiger Antrieb **47** dargestellt, bei dem die drei Leiterringe **48** direkt in die bereits auf der Nabe **49** positionierten kammförmigen, weichmagnetischen Körper **50** eingewickelt werden. Der Rotor besteht aus zwei, mit weichmagnetischen Blocksegmenten **51** bestückten Hälften **52**, über die nach dem radialen Zusammenfügen, ein topfförmiger Körper **53** axial aufgeschoben wird. Die Kammsegmente bestehen aus tagential geschichteten Stanzteilen mit radialer Kornorientierung. Der gemeinsame Rücken **54** ist breiter ausgeführt als die vier Zähne **55a-d**, wobei die mittleren Zähne **55b, c** jeweils vom magnetischen Fluß der beiden durch sie getrennten Leiterringe zeitversetzt durchflutet werden.

Der zeitliche Ablauf der Durchflutung ist in den beiden oberen Liniendiagrammen **56, 57** in **Fig. 7** für den zweiten und dritten Zahn **55b, c** dargestellt. Der Magnetkreis des mittleren Leiterrings nutzt zusammen mit den beiden Magnetkreisen der benachbarten Phasen die mittleren Zähne **55b, c**, wobei die Durchflutung zeitversetzt erfolgt und sich die Ausnutzungsdauer verdoppelt. Durch diese Mehrfachausnutzung ergibt sich eine Steigerung der Leistungsdichte. In der dreiphasigen Reluktanzmaschine kommutieren die Ströme entweder - wie im unteren Liniendiagrammen **58** gezeigt - in 120°ₑₗ-Blöcken, so daß ein konstanter Motorstrom fließt, oder sie Überlappen sich in Blöcken > 120°ₑₗ derart, daß die Momentenwelligkeit vermindert wird.

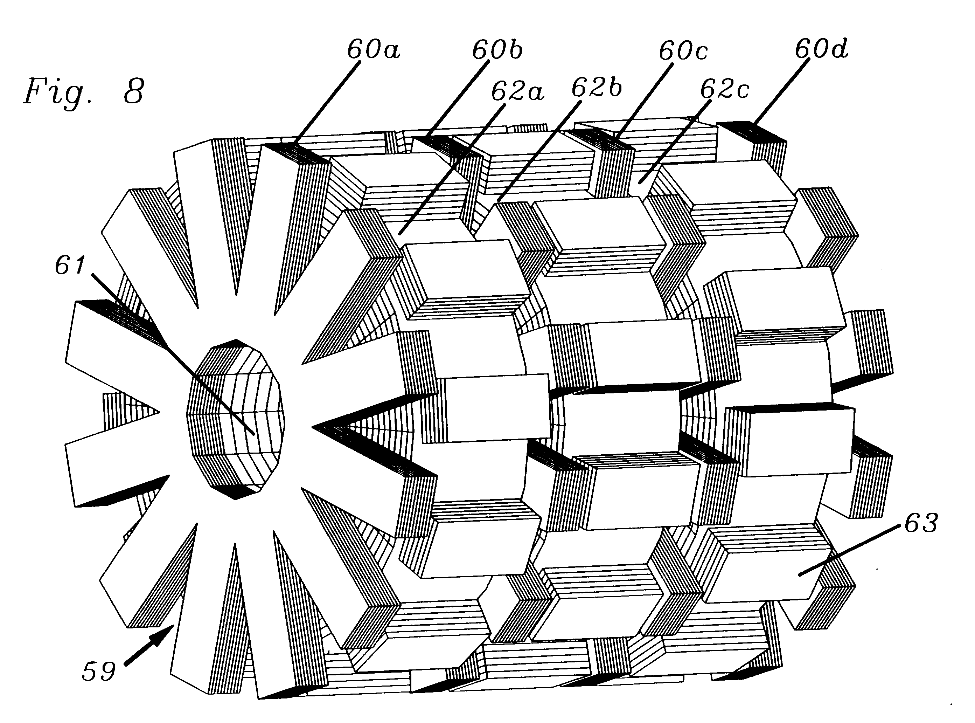

In **Fig. 8** sind die magnetisch und elektrisch aktiven Bauelemente eines dreiphasiger Antriebs dargestellt. Der weichmagnetische Körper **59** des 36-poligen Stators besteht hierzu aus vier baugleichen Sternscheiben **60a-d** und drei baugleichen Ringkernen **61**. Diese vorgefertigten Bauteile werden zusammen mit den drei baugleichen Leiterringen **62a-c** abwechselnd axial zusammengefügt. Die Stromversorgung des mittleren Leiterrings **62b** erfolgt vorzugsweise am Nutboden durch die benachbarten Phasen, oder durch Löcher bzw. Schlitze im Ringkern. Die weichmagnetischen Blocksegmente **63** der unterschiedlichen Phase sind um 1/3-Polteilung zueinander versetzt angeordnet, wobei sie vorteilhaft zunächst in baugleiche Ringe eingegossen werden, die eine axiale Verzahnung aufweisen, so daß die Versetzung bei der Montage gewährleistet wird. Bei hochpoligen, ringförmigen Antrieben können auch die Sternscheiben **60a-d** aus kornorientierten Elektrobleche hergestellt werden, wobei die Stanzteile nur wenige Polteilungen umfassen.

Für Antriebe höchster Leistungsdichte ist weiterhin eine Erhöhung der Phasenanszahl vorteilhaft, wobei sowohl der Anteil der mehrfach ausgenutzten Masse als auch die Stromblockbreite, z.B. auf 2/5 oder 3/7 der Periode, gesteigert werden kann.

## Patentansprüche

1. Transversalflußmaschine (22, 33) mit Leiterringen (15a-d, 24, 46, 48, 62), die von u-förmigen, weichmagnetischen Körpern (16a-d, 25, 35, 50, 59) von drei Seiten umschlossen sind, wobei ein magnetischer Kreis von weich- und/oder hartmagnetischen Teilen (19a-c, 20a-d, 23, 40, 51, 63) periodisch geschlossen wird, die durch zwei, radial außerhalb der Leiterringe (15a-d, 24, 46, 48, 62) angeordnete Luftspalte (21a-d, 38) vom jeweiligen u-förmigen, weichmagnetischen Körper (16a-d, 25, 35, 50, 59) getrennt sind,
dadurch gekennzeichnet, daß
die magnetisch aktiven Teile (19a bis 20d) des Rotors oder Stators teilweise axial innerhalb der Enden der u-förmigen weichmagnetischen Körpers (16a-d) angeorndet sind.

2. Transversalflußmaschine (22, 33) mit Leiterringen (15a-d, 24, 46, 48, 62) die von u-förmigen, weichmagnetischen Körpern (16a-d, 25, 35, 50, 59) von drei Seiten umschlossen sind, wobei ein magnetischer Kreis von weich- und/oder hartmagnetischen Teilen (19a-c, 20a-d, 23, 40, 51, 63) periodisch geschlossen wird, die durch zwei, radial außerhalb der Leiterringe (15a-d, 24, 48, 62) angeordnete Luftspalte (21a-d, 38) vom jeweiligen u-förmigen, weichmagnetischen Körper (16a-d, 25, 35, 50, 59) getrennt sind und Leiterringe (48, 62) unterschiedlicher Phase durch gemeinsam genutzte weichmagnetische Elemente (50, 59) getrennt sind,
dadurch gekennzeichnet, daß
der weichmagnetische Körper (50) aus in tangentiale Richtung geschichteten, kammförmigen Segmenten besteht, wobei die kammförmigen Segmente mehrere Leiterringe von drei Seiten umschließen und die zwischen zwei Leiterringen liegenden Bereiche des kammförmigen Segmentes abwechselnd vom Fluß unterschiedlicher Phasen durchflutet werden.

3. Transversalflußmaschine nach Anspruch 1 oder 2,
dadurch gekennzeichnet, daß
der u-förmige weichmagnetische Körper (16a-d, 25, 35) in mindestens zwei Teile (17a bis 18d') aufgeteilt ist.

4. Transversalflußmaschine nach Anspruch 3,
dadurch gekennzeichnet, daß
der u-förmige weichmagnetische Körper (16a-d, 25, 35) in drei Segmente (17a bis 18d') aufgeteilt ist, die den magnetischen Fluß vorwiegend in eine Richtung leiten, wobei die gegenüberliegenden Segmente (18a bis 18d') baugleich sind.

5. Transversalflußmaschine nach Anspruch 4,
dadurch gekennzeichnet, daß
sternförmige flache Scheiben (59a-d) den magnetischen Fluß radial nach außen führen.

6. Transversalflußmaschine nach Anspruch 1 oder 2,
dadurch gekennzeichnet, daß
der Permanentmagnet (20c, 23) ringförmig und sektorweise in entgegengesetzte Richtung aufmagnetisiert ist.

7. Transversalflußmaschine nach Anspruch 1 oder 2,
dadurch gekennzeichnet, daß
die Grenzflächen zwischen den zueinander beweglichen Teilen (18a, 20a bzw. 18b, 19c) eines magnetischen Kreises gleichzeitig in axiale und radiale Richtung verlaufen sind.

8. Transversalflußmaschine nach Anspruch 7,
dadurch gekennzeichnet, daß
die Permanentmagnete (20a) an den beiden geschrägten Enden eines den Magnetkreis schließenden weichmagnetischen Segments (19a) angeordnet sind, wobei der Schrägungswinkel bezüglich der Rotationsachse zwischen 45 und 70° betragt.

9. Transversalflußmaschine nach einem der voranstehenden Ansprüche,
dadurch gekennzeichnet, daß
der Leiterring (1, 15a, c, d, 24, 46) aus aufgewickelten, rechteckförmigen Profilleitern (15b) oder aus einem hardanodisierten Aluminiumband (15c) besteht.

10. Transversalflußmaschine nach Anspruch 1 oder 2,
dadurch gekennzeichnet, daß
jeder das elektrisch erzeugte Magnetfeld bündelnde weichmagnetische Körper (2-5, 50, 51, 59, 63) aus mindestens 2 Segmenten besteht, wobei das radial äußere Segment (5, 51, 63) gegenüber dem relativ zum Leiterring (1, 15a-d, 24, 48, 62) ortsfesten Teil des weichmagnetischen Körpers (2-4, 50, 60a-d, 61) rotiert.

## Claims

1. Transverse flux machine (22, 33) with conductor rings (15a-d, 24, 46, 48, 62) which are enclosed on three sides by u-shaped soft magnetic bodies (16a-d, 25, 35, 50, 59), said enclosure causing a magnetic circuit of soft and/or hard magnetic parts (19a-c, 20a-d, 23, 40, 51, 63) to be closed periodically, said soft and/or hard magnetic parts being separated from the u-shaped soft magnetic body by two radial air gaps (21a-d, 38) which are arranged outside the conductor rings, wherein the soft and/or hard magnetic parts (19a - 20d) of the rotor or the stator are arranged axially in part within the ends of the u-shaped soft magnetic bodies.

2. Transverse flux machine (22, 33) with conductor rings (15a-d, 24, 46, 48, 62) which are enclosed on three sides by u-shaped soft magnetic bodies (16a-d, 25, 35, 50, 59), said enclosure causing a magnetic circuit of soft and/or hard magnetic parts (19a-c, 20a-d, 23, 40, 51, 63) to be closed periodically, said soft and/or hard magnetic parts being separated from the u-shaped soft magnetic body by two radial air gaps (21a-d, 38) which are arranged outside the conductor rings, wherein parts of said u-shaped soft magnetic body (50, 59) are alternately flown through by the flux of different phases and wherein said conductor rings (48, 62) of different phases are separated by said soft magnetic bodies (50, 59) which said conductor rings jointly utilize.

3. A transverse flux machine as recited in claim 1 or 2, wherein the u-shaped soft magnetic body (16a-d, 25, 35) is divided into at least two parts (17a-18d').

4. A transverse flux machine as recited in claim 3, wherein the u-shaped soft magnetic body (16a-d, 25, 35) is divided into 3 segments (17a - 18d') which conduct the magnetic flux predominantly into one direction and wherein the oppositely placed segments (18a - 18d') are identical.

5. A transverse flux machine as recited in claim 4, wherein star-shaped flat discs (59a-d) conduct the magnetic flux radially toward the outer circumference.

6. A transverse flux machine as recited in claim 1 or 2, wherein said hard magnetic parts (20c, 23) are ring-shaped and magnetized in opposite directions.

7. A transverse flux machine as recited in claim 1 or 2, wherein the contact surfaces between parts (18a, 20a or 18b, 19c respectively) of said magnetic circuit which are movable against each other extend simultaneously into axial and radial direction.

8. A transverse flux machine as recited in claim 7, wherein said hard magnetic parts (20a) are arranged at the two beveled ends of said soft magnetic parts (19a) that close said magnetic circuit and wherein the beveling angle with reference to the rotational axis lies between 45 and 70°.

9. A transverse flux machine as recited in one of the proceeding claims, wherin said conductor ring (1, 15a, c, d, 24, 26) consists of wound rectangular profile conductors (15b) or of hard anodized aluminum strip (15c).

10. A Transverse flux machine as recited in claim 1 or 2, wherein every soft magnetic body (2-5, 50, 51, 59, 63), focussing by the electrically generated field, exists at least of two parts, whereby the radial external part (5, 51, 63) is rotating as to the conductor ring (1, 15a-d, 24, 48, 62) stationary part of the soft magnetic body (2-4, 50, 60a-d, 61).

## Revendications

1. Moteur à flux transversal (22, 23) à anneaux conducteurs (15a-d, 24, 46, 48, 62) entourés sur trois côtés par des corps magnétiques doux en forme de U (16a-d, 25, 35, 50, 59), où un circuit magnétique de fragments magnétiques doux et/ou durs (19a-c, 20a-d, 23, 40, 51, 63) est périodiquement fermé, lesdits fragments magnétiques étant séparés des corps magnétiques doux en forme de U (16a-d, 25, 35, 50, 59) respectifs par deux entrefers (21a-d, 38) disposés radialement à l'extérieur des anneaux conducteurs (15a-d, 24, 46, 48, 62),
**caractérisé en ce que**
les fragments magnétiques actifs (19a à 20d) du rotor ou du stator sont en partie disposés axialement entre les extrémités des corps magnétiques doux en forme de U (16a-d).

2. Moteur à flux transversal (22, 23) à anneaux conducteurs (15a-d, 24, 46, 48, 62) entourés sur trois côtés par des corps magnétiques doux en forme de U (16a-d, 25, 35, 50, 59), où un circuit magnétique de fragments magnétiques doux et/ou durs (19a-c, 20a-d, 23, 40, 51, 63) est périodiquement fermé, lesdits fragments magnétiques étant séparés des corps magnétiques doux en forme de U (16a-d, 25, 35, 50, 59) respectifs par deux entrefers (21a-d, 38) disposés radialement à l'extérieur des anneaux conducteurs (15a-d, 24, 48, 62), et les anneaux conducteurs (48, 62) de phases différentes étant séparés par des éléments magnétiques doux (50, 59) utilisés en commun,
**caractérisé en ce que**
le corps magnétique doux (50) est constitué de segments en forme de peigne superposés en direction tangentielle, lesdits segments en forme de peigne entourant plusieurs anneaux conducteurs sur trois côtés et les zones des segments en forme de peigne situées entre deux anneaux conducteurs étant traversées en alternance par les flux de phases différentes.

3. Moteur à flux transversal selon revendication 1 ou 2,
**caractérisé en ce que**
le corps magnétique doux en forme de U (16a-d, 25, 35) est divisé en deux pièces (17a à 18d') au moins.

4. Moteur à flux transversal selon revendication 3,
**caractérisé en ce que**
le corps magnétique doux en forme de U (16a-d, 25, 35) est divisé en trois segments (17a à 18d'), lesquels conduisent essentiellement le flux magnétique dans une direction, les segments opposés (18a à 18d') étant de construction identique.

5. Moteur à flux transversal selon revendication 4,
**caractérisé en ce que**
des disques plats en étoile (59a-d) conduisent radialement le flux magnétique vers l'extérieur.

6. Moteur à flux transversal selon revendication 1 ou 2,
**caractérisé en ce que**
l'aimant permanent (20c, 23) est de forme annulaire et magnétisé par secteurs dans la direction opposée.

7. Moteur à flux transversal selon revendication 1 ou 2,
**caracterisé en ce que**
les surfaces de séparation entre les pièces (18a, 20a ou 18b, 19c) d'un circuit magnétique se déplaçant l'une vers l'autre, s'étendent simultanément en direction axiale et en direction radiale.

8. Moteur à flux transversal selon revendication 7,
**caractérisé en ce que**
les aimants permanents (20a) sont disposés aux deux extrémités obliques d'un segment magnétique doux (19a) fermant le circuit magnétique, l'angle d'inclinaison par rapport à l'axe de rotation étant compris entre 45 et 70°.

9. Moteur à flux transversal selon l'une des revendications précédentes,
**caractérisé en ce que**
l'anneau conducteur (1, 15a, c, d, 24, 46) consiste en conducteurs profilés (15b) rectangulaires enroulés ou en une bande d'aluminium anodisé à dur (15c).

10. Moteur à flux transversal selon revendication 1 ou 2,
**caractérisé en en ce que**
chaque corps magnétique doux (2-5, 50, 51, 59, 63) concentrant le champ magnétique électriquement produit consiste en 2 segments au moins, le segment radialement extérieur (5, 51, 63) étant rotatif par rapport à la pièce du corps magnétique doux (2-4, 50, 50a-d, 61) fixe relativement à l'anneau conducteur (1, 15a-d, 24, 48, 62).
